(19) Europäisches Patentamt
European Patent Office
Office européen des brevets

(11) **EP 3 481 204 B1**

(12) **EUROPÄISCHE PATENTSCHRIFT**

(45) Veröffentlichungstag und Bekanntmachung des Hinweises auf die Patenterteilung:
**31.08.2022 Patentblatt 2022/35**

(21) Anmeldenummer: **17737587.0**

(22) Anmeldetag: **11.07.2017**

(51) Internationale Patentklassifikation (IPC):
**A21B 3/04** (2006.01)   **F24C 7/08** (2006.01)
**F24C 15/32** (2006.01)

(52) Gemeinsame Patentklassifikation (CPC):
**A21B 3/04; F24C 7/08; F24C 15/327**

(86) Internationale Anmeldenummer:
**PCT/EP2017/067408**

(87) Internationale Veröffentlichungsnummer:
**WO 2018/011210 (18.01.2018 Gazette 2018/03)**

(54) **VERFAHREN ZUR BESTIMMUNG DER FEUCHTIGKEIT INNERHALB EINES GARRAUMES EINES GARGERÄTS SOWIE GARGERÄT**

METHOD FOR DETERMINING THE MOISTURE CONTENT WITHIN A COOKING CHAMBER OF A COOKING DEVICE, AND COOKING DEVICE

PROCÉDÉ DE DÉTERMINATION DE L'HUMIDITÉ DANS LA CHAMBRE DE CUISSON D'UN APPAREIL DE CUISSON, AINSI QU'APPAREIL DE CUISSON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2016 DE 102016112683**

(43) Veröffentlichungstag der Anmeldung:
**15.05.2019 Patentblatt 2019/20**

(73) Patentinhaber: **RATIONAL Aktiengesellschaft**
**86899 Landsberg am Lech (DE)**

(72) Erfinder:
• **ROOSEN, Petra**
**52074 Aachen (DE)**
• **SCHREINER, Thomas**
**86916 Kaufering (DE)**
• **MERKER, Oliver**
**86899 Landsberg (DE)**

(74) Vertreter: **Prinz & Partner mbB**
**Patent- und Rechtsanwälte**
**Rundfunkplatz 2**
**80335 München (DE)**

(56) Entgegenhaltungen:
**EP-A2- 1 300 079**

**Beschreibung**

Die Erfindung betrifft ein Verfahren zur Bestimmung der Feuchtigkeit innerhalb eines Garraums sowie ein Gargerät hierzu.

Solche Gargeräte können als sogenannte Kombidämpfer ausgeführt sein, also als Gargeräte, bei denen das zu garende Lebensmittel mit Heißluft und/oder Dampf gegart wird. Bei solchen Gargeräten ist es zur optimalen Zubereitung von Lebensmitteln notwendig, die Feuchtigkeit im Garraum, d. h. den Wassergehalt der im Garraum des Gargeräts befindlichen Atmosphäre, zu kennen.

Zur Messung der Feuchtigkeit sind verschiedene Methoden üblich, wie die Messung eines Druckabfalls am Lüfterrad des Gargerätes. Die Ergebnisse solcher Methoden sind jedoch auch von anderen äußeren Faktoren abhängig, wie beispielsweise vom Luftdruck, wodurch Messungenauigkeiten entstehen können.

Die EP 1 300 079 A2 offenbart ein Gargerät mit einem Resonanzraum zur Bestimmung der Feuchte im Garraum. Mittels eines Lautsprechers wird die Resonanzfrequenz des Resonanzraumes angeregt, wobei die Frequenz, mit der der Lautsprecher betrieben wird, stets auf die sich ändernde Resonanzfrequenz nachgeregelt wird.

Es ist somit Aufgabe der Erfindung, ein Gargerät sowie ein Verfahren zur Bestimmung der Feuchtigkeit innerhalb eines Garraumes eines Gargerätes bereitzustellen, die mit einfachen Mitteln die Feuchtigkeit innerhalb des Garraumes präzise bestimmen können.

Die Aufgabe wird gelöst durch ein Verfahren mit den folgenden Schritten:

a) in einem Resonanzraum im Gargerät wird mittels eines Schallerzeugers ein akustisches breitbandiges Signal erzeugt,

b) eine Steuereinheit empfängt von einem Mikrofon im Resonanzraum aufgenommene Signale,

c) die Steuereinheit bestimmt anhand der empfangenen Signale das Frequenzspektrum des im Resonanzraum vorhandenen akustischen Signals unabhängig von der Ansteuerung des Schallerzeugers und anhand der Grundfrequenz des Frequenzspektrums oder Obertönen des Frequenzspektrums, aus denen die Grundfrequenz bestimmbar ist, die Schallgeschwindigkeit innerhalb des Resonanzraums, wobei der Resonanzraum mit Garraumatmosphäre gefüllt ist,

d) die Steuereinheit empfängt oder bestimmt einen Temperaturwert, wobei der Temperaturwert einer Temperatur im Resonanzraum entspricht,

e) die Steuereinheit bestimmt mithilfe des Temperaturwertes und der Schallgeschwindigkeit die Feuchtigkeit innerhalb des Garraums.

Dabei werden die Signale bzw. Schwingungen im Resonanzraum durch eine breitbandige Schallquelle erzeugt. Die Schwingungen im Resonanzraum sind Eigenschwingungen des Resonanzraumes, d. h. stehende Wellen der Grundordnung oder höherer Ordnungen im Resonanzraum, auch Grundschwingung bzw. Obertöne genannt.

Die Feuchtigkeit wird durch die Bestimmung bzw. indirekte Messung der Schallgeschwindigkeit im Resonanzraum bestimmt, wobei die Schallgeschwindigkeit im Resonanzraum von der Temperatur und der Zusammensetzung der Atmosphäre im Resonanzraum abhängig ist. Zur Bestimmung der Schallgeschwindigkeit werden die Frequenzen der im Resonanzraum angeregten Schwingungen, insbesondere der Frequenz der Grundschwingung ermittelt, woraus mithilfe der bekannten Wellenlänge der Grundschwingung auf die Schallgeschwindigkeit geschlossen werden kann.

Dadurch, dass zur Bestimmung der Schallgeschwindigkeit das Frequenzspektrum der im Resonanzraum vorhandenen Schwingungen bestimmt wird, kann zum einen die Frequenz der Grundschwingung sehr präzise bestimmt werden, weil die ermittelten Frequenzen der Obertöne zur Korrektur des ermittelten Frequenzwertes der Grundschwingung herangezogen werden können. Zum anderen ist die Bestimmung der Grundfrequenz und damit die Bestimmung der Feuchtigkeit unabhängig von der Ansteuerung der Schallquelle, und ein kompliziertes und phasenrichtiges Ankoppeln des Schalles des Schallerzeugers an den Resonanzraum entfällt, da durch die breitbandige Anregung mit Sicherheit Eigenschwingungen, d. h. Resonanzen im Resonanzraum hervorgerufen werden. Auf diese Weise kann die Feuchtigkeit mit einfachen und zum Teil bereits im Gargerät vorhandenen Mitteln präzise bestimmt werden.

Der Temperaturwert ist beispielsweise ein Messwert eines Temperatursensors im Resonanzraum oder im Garraum. Denkbar ist jedoch auch, dass der Temperaturwert ein anderer Wert ist, anhand dessen die Steuereinheit auf die Temperatur im Resonanzraum schließen kann, beispielsweise die Solltemperatur der Heizvorrichtung des Gargerätes. Auf diese Weise kann die Temperatur im Resonanzraum sehr präzise bestimmt werden.

Beispielsweise ermittelt die Steuereinheit das Frequenzspektrum mittels Fourieranalyse und/oder durch die Bestimmung der Korrelationsfunktion, wodurch das Frequenzspektrum zuverlässig ermittelt werden kann.

Ferner wird die Aufgabe durch ein Gargerät gelöst mit einem Garraum, einem Resonanzraum, einem Schallerzeuger, der dazu ausgebildet ist, ein breitbandiges Signal im Resonanzraum zu erzeugen, einem dem Resonanzraum zugeordneten Mikrofon, einer Temperaturwerteinheit, die ein von der Temperatur der Atmosphäre im Gargerät abhängiges Signal erzeugen kann, und einer Steuereinheit, an die das Mikrofon und die Temperaturwerteinheit angeschlossen sind, wobei die Steuereinheit ein Modul zur Spektralanalyse enthält, insbesondere ein Fourieranalyse- und/oder ein Korrelationsfunktionsmodul, und wobei die Steuereinheit dazu ausgebildet und eingerichtet ist, anhand der vom Mikrofon empfangenen Signale ein Frequenzspektrum des im Resonanzraum vorhandenen akustischen Signals unabhängig von der Ansteuerung des Schallerzeugers zu bestimmen und anhand der Grundfrequenz des Frequenzspektrums oder Obertönen des Frequenzspektrums, aus denen die Grundfrequenz bestimmbar ist, die Schallgeschwindigkeit innerhalb des Resonanzraums und mithilfe des Temperaturwertes und der Schallgeschwindigkeit die Feuchtigkeit innerhalb des Garraums gemäß einem erfindungsgemäßem Verfahren zu bestimmen. Durch das Modul zur Spektralanalyse ist die Steuereinheit in der Lage, präzise das Frequenzspektrum der im Resonanzraum auftretenden Schwingungen zu bestimmen.

Vorzugsweise weist das Gargerät ein Lüfterrad auf, wobei das Lüfterrad den Schallerzeuger darstellt. Es sind somit über die bereits im Gargerät vorhandenen Komponenten keine weiteren Komponenten erforderlich, um den benötigten Schall zu erzeugen.

Das Gargerät kann einen Lautsprecher aufweisen, wobei der Lautsprecher den Schallerzeuger darstellt, sodass die Feuchtigkeit auch unabhängig vom Betrieb des Gargerätes, insbesondere unabhängig vom Betrieb des Lüfterrads, bestimmt werden kann.

In einer Ausgestaltung der Erfindung weist das Gargerät eine Lautsprechersteuerung auf, die den Lautsprecher so ansteuern kann, dass der Lautsprecher ein Rauschen emittiert oder einen Frequenzsweep durchführt. Dabei kann das Rauschen weißes Rauschen sein. Bei einem Frequenzsweep erzeugt der Lautsprecher eine Schwingung einer Frequenz, wobei die Frequenz dieser Schwingung über ein bestimmtes Zeitintervall einen Frequenzbereich durchfährt. Auch auf diese Weise wird ein im Endeffekt breitbandiges Signal erzeugt.

Aufgrund dieser Art der Ansteuerung ist es nicht notwendig, das Signal des Lautsprechers in Amplitude und Phase genau auf den Resonanzraum abzustimmen, was insbesondere dann Schwierigkeiten bereitet, wenn der Lautsprecher räumlich entfernt vom Resonanzraum vorgesehen ist. Durch die breitbandige Ansteuerung des Lautsprechers entfällt diese komplexe Anpassung, sodass die Position des Lautsprechers unabhängig von der Position des Resonanzraumes gewählt werden kann.

In einer Ausführungsvariante ist der Garraum des Gargerätes der Resonanzraum, wodurch auch zur Realisierung des Resonanzraumes kein weiteres Bauteil notwendig ist.

In einer weiteren Ausführungsvariante der Erfindung liegt der Resonanzraum innerhalb eines Resonators, der zum Garraum des Gargeräts hin offen ist. Dabei stellt ein geometrisch klar definierter und im Vergleich zum Garraum vergleichsweise kleiner Raum, beispielsweise in Form eines Zylinders oder einer rechteckigen Kavität, den Resonator dar. Auf diese Weise können die Abmessungen und Geometrien des Resonanzraumes frei gewählt werden.

Beispielsweise ist der Resonator im Garraum des Gargerätes angeordnet. Auf diese Weise kann der Garraum sehr gut thermisch und akustisch an den Resonator gekoppelt werden. Der Resonator kann an seinem tiefer liegenden Ende offen sein und/oder so angeordnet sein, dass der Resonator beim Reinigen des Garraums des Gargerätes auch durch die Waschflotte des Gargerätes gereinigt wird. Auch kann der Temperatursensor am Resonator angeordnet sein.

Vorzugsweise ist der Resonator als Rohr ausgeführt, wodurch der Resonator einfach und kostengünstig herzustellen ist. Beispielsweise ist das Rohr 20 cm lang und/oder hat einen Innendurchmesser von 1,5 cm bis 2 cm. Auch kann das Rohr einseitig oder beidseitig geöffnet sein und/oder ist vertikal im Garraum angeordnet. Denkbar ist auch, dass in der Wandung des Rohres wenigstens ein Durchbruch vorgesehen ist, um Einfluss auf die im Resonator entstehenden Schwingungen zu nehmen.

In einer weiteren Ausführungsform weist der Resonator ein erstes Rohr und ein mit dem ersten Rohr akustisch gekoppeltes zweites Rohr und/oder eine mit dem ersten Rohr akustisch gekoppelte Kavität auf. Die Rohre können vorzugsweise unterschiedlich lang und/oder haben unterschiedliche Durchmesser. Außerdem können die Rohre parallel zueinander sein. Dadurch, dass durch die beiden Rohre bzw. durch das erste Rohr und die Kavität mehrere akustisch gekoppelte Volumina geschaffen werden, erhält das Frequenz- bzw. Resonanzspektrum des Resonators eine charakteristische Struktur, die eine einfache Unterscheidungsmöglichkeit gegenüber akustischen Störquellen bietet.

Beispielsweise gehen das zweite Rohr und/oder die Kavität vom ersten Rohr aus, wodurch eine gute akustische Kopplung garantiert ist.

In einer Ausführungsvariante der Erfindung weist das Gargerät einen Hohlraum auf, der mit dem Resonanzraum an einer Kopplungsstelle akustisch gekoppelt ist, wobei das Mikrofon im Hohlraum vorgesehen ist. Auf diese Weise kann das Mikrofon außerhalb des Resonanzraumes und des Garraumes angeordnet werden. Dabei kann der Hohlraum durch ein weiteres Rohr oder einen Schlauch gebildet sein. Der Durchmesser des Schlauchs oder des Rohres unterscheidet sich dabei von dem Durchmesser des Resonators an der Kopplungsstelle, um einen Impedanzsprung an der Kopplungsstelle zu erzeugen, wodurch die Kopplung zwischen dem Hohlraum und dem Resonator verringert wird, um weniger Energie aus dem Resonator auszukoppeln. Auch kann die Länge des Hohlraumes so gewählt sein, dass sich die Resonanzfrequenz des Systems aus Resonanzraum und Hohlraum deutlich von der Resonanzfrequenz des Resonanzraumes unterscheidet, sodass im Frequenzspektrum deutlich zwischen den Schwingungen im Resonanzraum allein und den eventuell auftretenden Schwingungen im System aus Hohlraum und Resonanzraum unterschieden werden kann.

Im Falle von zwei separaten Rohren als Resonator kann der Hohlraum mit beiden Innenvolumina der Rohre direkt gekoppelt sein. Auch ist es in diesem Fall denkbar, dass zwei Hohlräume mit je einem Mikrofon vorgesehen sind, die mit jeweils einem der Rohre gekoppelt sind.

Vorzugsweise weist der Hohlraum eine Membran auf, die in der Kopplungsstelle angeordnet ist, um das Mikrofon vor Wasserdampf, Verschmutzung und Hitze zu schützen.

Die Membran kann eine Prägung aufweisen und/oder derart geformt sein, dass durch den Einbau, z. B. in Presspassung, die Rückstellkräfte gegen Auslenkung der Membran verringert oder nicht erhöht werden. Außerdem kann in der Wandung des Hohlraums eine Stufe zur Anbringung der Membran vorgesehen sein.

Für eine gute Ankopplung des Hohlraums an den Resonanzraum kann die Membran eine Prägung aus wenigstens einem konzentrischen Ring aufweisen.

Beispielsweise kann der Hohlraum an seinem der Kopplungsstelle abgewandten Ende schwingungsdämpfend oder schwingungsabsorbierend geformt sein, insbesondere sich zum Ende hin verjüngen, insbesondere spitz zulaufen, sodass Schwingungen im Hohlraum gedämpft werden und sich keine stehenden Wellen im Hohlraum ausbilden können.

Der Hohlraum kann zudem, insbesondere an seinem der Kopplungsstelle abgewandten Ende, mit schallabsorbierendem Material versehen sein, sodass Schwingungen im Hohlraum nicht reflektiert werden.

In einer Ausführungsvariante weitet sich der Hohlraum zur Koppelungsstelle hin trichterförmig auf. Dadurch können eine dünne Membran mit großer Fläche verwendet und Reflektionen an der Kopplungsstelle vermieden werden.

In einer weiteren Ausgestaltung der Erfindung ist das Mikrofon im Resonanzraum vorgesehen, wodurch die Amplituden der Schwingungen im Resonanzraum direkt und genau gemessen werden können.

Vorzugsweise ist das Mikrofon oder die Kopplungsstelle im Bereich des Maximums des Schalldrucks einer oder mehrerer der Eigenschwingungen des Resonanzraumes angeordnet, wodurch eine gute Kopplung des Mikrofons an den Resonator erreicht wird, sodass die Qualität der Messung verbessert werden kann. Denkbar sind auch andere Positionen des Mikrofons oder der Kopplungsstelle, die eine günstige Kopplung aufweisen. Eine mögliche Position des Mikrofons oder der Kopplungsstelle ist die Mitte des Rohres in Bezug auf seine Längsachse. Vorzugsweise liegt das Mikrofon oder die Kopplungsstelle vom Rohrende in Längsrichtung zwischen 10% und 15%, insbesondere etwa 13% der Länge des Rohres entfernt.

In einer Ausführungsform ist die Temperaturwerteinheit am oder im Resonator, insbesondere im Bereich der Kopplungsstelle vorgesehen, sodass zuverlässig die Temperatur der im Resonator schwingenden Luft gemessen werden kann. Die Temperaturwerteinheit kann ein Thermometer sein, zum Beispiel ein Thermoelement.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:

- Figur 1 eine erste Ausführungsform eines erfindungsgemäßen Gargerätes schematisch im Schnitt,

- Figur 2 eine vergrößerte Ansicht eines Teils des Gargerätes nach Figur 1,

- Figur 3 ein beispielhaftes von der Steuereinheit des erfindungsgemäßen Gargerätes nach Figur 1 ermitteltes Frequenzspektrum,

- Figur 4 ein schematisches Ablaufdiagramm des Verfahrens zur Bestimmung der Feuchtigkeit,

- Figur 5 eine vergrößerte Ansicht eines Teils einer zweiten Ausführungsform eines erfindungsgemäßen Gargeräts,

- Figur 6 eine dritte Ausführungsform eines erfindungsgemäßen Gargeräts schematisch im Schnitt,

- Figur 7 einen vergrößerte Ansicht eines Teils einer vierten Ausführungsform eines erfindungsgemäßen Gargerätes,

- Figur 8 eine Membran eines Gargerätes nach Figur 7 im Schnitt,

- Figur 9 einen vergrößerte Draufsicht eines Teils einer fünften Ausführungsform eines erfindungsgemäßen Gargerätes, und

- Figur 10 einen vergrößerte Draufsicht eines Teils einer sechsten Ausführungsform eines erfindungsgemäßen Gargerätes.

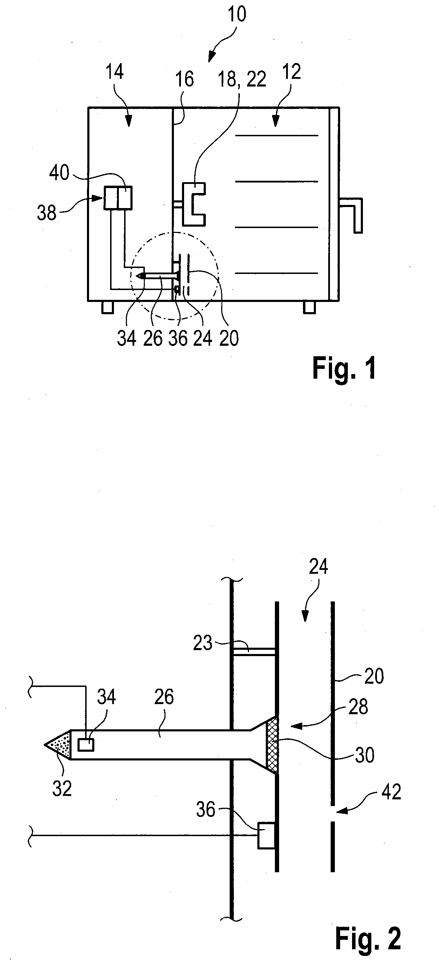

In Figur 1 ist ein Gargerät 10 gezeigt, das für den Profieinsatz in Großküchen und der Großgastronomie vorgesehen. Es handelt sich hier beispielsweise um einen Kombidämpfer, der unterschiedliche Speisen mit Heißluft und/oder Heißdampf zubereiten kann. Hierzu wird im Garraum 12 eine Atmosphäre erzeugt, die die zum Garen gewünschte Temperatur und Feuchtigkeit aufweist. Die Temperatur und die Feuchtigkeit werden von einer Gargerätsteuerung kontrolliert, die eine Heizvorrichtung und einen Verdampfer steuert. Aus Gründen der Übersichtlichkeit wurde auf die Darstellung der Gargerätsteuerung, der Heizvorrichtung und des Verdampfers verzichtet.

Der Garraum 12 und der Technikraum 14 sind durch eine Rückwand 16 des Garraums 12 voneinander getrennt.

An der Rückwand 16 ist garraumseitig ein Lüfterrad 18 und ein Resonator 20 angeordnet, wobei das Lüfterrad 18 einen Schallerzeuger 22 darstellt.

Der Resonator 20 ist mittels einer Befestigung 23 an der Rückwand 16 befestigt. Der Bereich des Gargerätes 10 um den Resonator 20 ist in Figur 2 vergrößert dargestellt.

Der Resonator 20 ist als Rohr ausgebildet und hat beispielsweise eine Länge L von 20 cm und einen Innendurchmesser zwischen 1,5 cm und 2 cm. Beide Enden des Rohres sind geöffnet, sodass der Resonator 20 ein beidseits offener Resonator ist. Denkbar ist jedoch auch, dass nur eine Seite des Resonators 20 offen ist.

Der Resonator 20 definiert einen Resonanzraum 24 innerhalb des Rohres. Der Resonanzraum 24 liegt somit innerhalb des Garraums 12 und ist zum Garraum 12 hin geöffnet.

Das Rohr und somit der Resonator 20 sind vertikal im Garraum 12 angeordnet. Dadurch dringt bei der Reinigung des Gargerätes 10 die Waschflotte auch in das Rohr des Resonators 20 ein und reinigt so den Resonator 20.

Am Resonator 20 ist ein Hohlraum 26 vorgesehen, der durch einen Schlauch oder ein weiteres Rohr gebildet sein kann.

Der Hohlraum 26 mündet in den Resonanzraum 24 des Resonators 20, wobei die Stelle, an der der Hohlraum 26 in den Resonanzraum 24 übergeht, als Kopplungsstelle 28 bezeichnet wird.

An der Kopplungsstelle 28 ist eine dünne Membran 30 vorgesehen, die den Hohlraum 26 gegenüber dem Resonanzraum 24 verschließt, sodass weder heiße Luft, noch Wasserdampf noch Schmutz in den Hohlraum 26 eindringen können.

Gleichzeitig kann die Membran 30 jedoch schwingen, sodass Schwingungen aus dem Resonanzraum 24 in den Hohlraum 26 übertragen werden können. Der Hohlraum 26 und der Resonanzraum 24 sind also akustisch gekoppelt.

Die Membran 30 ist beispielsweise zwischen 10 μm und 50 μm dick.

In der gezeigten Ausführungsform mündet der Hohlraum 26, in Längsrichtung des Resonators 20 betrachtet, mittig in den Resonanzraum 24. In anderen Worten befindet sich die Kopplungsstelle 28 in der gezeigten Ausführungsform auf halber Länge L/2 des Resonators 20.

Der Durchmesser des Hohlraumes 26 an der Kopplungsstelle 28 unterscheidet sich vom Durchmesser des Resonanzraumes 24. Beispielsweise ist der Durchmesser des Hohlraumes 26 deutlich geringer.

Der Hohlraum 26 erstreckt sich in die andere Richtung, d. h. vom Resonator 20 ausgehend durch die Rückwand 16 in den Technikraum 14 hinein.

An dem dem Resonator 20 abgewandten Ende des Hohlraumes 26 läuft der den Hohlraum 26 begrenzende Schlauch oder das Rohr spitz zu und ist verschlossen. Auf diese Weise ist der Hohlraum 26 an seinem der Kopplungsstelle 28 abgewandten Ende schwingungsdämpfend und schwingungsabsorbierend geformt.

Auch kann im Hohlraum 26 schallabsorbierendes Material 32 vorgesehen sein.

In der gezeigten Ausführungsform ist in dem Bereich des Hohlraumes 26, der sich innerhalb des Technikraums 14 befindet, ein Mikrofon 34 vorgesehen.

Außerdem ist in der gezeigten Ausführungsform eine Temperaturwerteinheit 36 in Form eines Temperatursensors am Resonator 20 vorgesehen.

Im Technikraum 14 ist eine Steuereinheit 38 angeordnet, die mit dem Mikrofon 34 und der Temperaturwerteinheit 36, also dem Temperatursensor verbunden ist. Die Steuereinheit 38 empfängt Signale sowohl vom Mikrofon 34 als auch von der Temperaturwerteinheit 36.

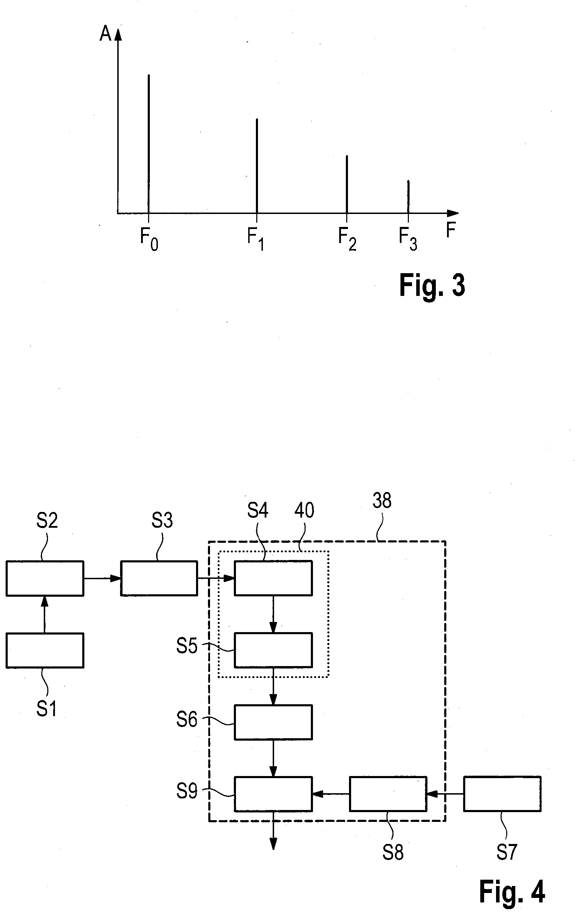

Die Steuereinheit 38 weist ein Modul 40 auf, das die Signale des Mikrofons 34 erhält und eine Spektralanalyse des empfangenen Signals mittels einer Fourieranalyse- und/oder eine Korrelationsfunktion durchführen kann. Auf diese Weise kann das Modul 40 das Frequenzspektrum (Fig. 3) des Signals des Mikrofons 34 und damit das Frequenzspektrum der Schwingungen im Resonanzraum 24 bestimmen.

Durch einen oder mehrere Durchbrüche 42 in der Wandung des Resonators 20 bzw. des Rohres des Resonators 20 kann Einfluss darauf genommen werden, welche Obertöne sich im Resonator 20 ausbilden können.

Zur Bestimmung der Feuchtigkeit während des Betriebs des Gargerätes 10 wird zunächst Schall im Garraum 12 erzeugt (S1). Dies geschieht in der gezeigten Ausführungsform durch das Lüfterrad 18, das während seines Betriebs ein breitbandiges Rauschen erzeugt, also als Schallerzeuger 22 mit einem breitbandigen Spektrum dient.

Der vom Schallerzeuger 22 erzeugte Schall propagiert zum Resonator 20 und regt innerhalb des Resonators 20, d. h. im Resonanzraum 24, die Eigenschwingungen des Resonanzraumes 24 an. Hierdurch bilden sich im Resonanzraum 24 stehende akustische Wellen aus. Dabei können im Resonanzraum 24 neben der Grundschwingung bzw. dem Grundton des Resonators 20 auch ein oder mehrere Obertöne angeregt werden (S2).

Denkbar ist auch, dass ausschließlich Obertöne angeregt werden, wenn die Frequenz der Grundschwingung außerhalb des Bereiches liegt, der vom Schallerzeuger 22 erzeugt wird.

Die Grundschwingung des Resonators 20 hat an den beiden Öffnungen des Rohres des Resonators 20 Druckknoten und auf der halben Länge L/2 einen Druckbauch. Dieser Druckbauch bildet sich somit an der Kopplungsstelle 28 aus und führt dazu, dass sich die Schwingungen durch die Membran 30 in den Hohlraum 26 fortpflanzen.

Im Hohlraum 26 werden die akustischen Schwingungen dann vom Mikrofon 34 aufgenommen und als elektrisches Signal an die Steuereinheit 38, genauer gesagt an das Modul 40 zur Spektralanalyse übermittelt (S3).

Um zu verhindern, dass sich innerhalb des Hohlraumes 26 ebenfalls eine stehende Welle ausbildet, ist der Hohlraum 26 mit dem schallabsorbierenden Material 32 versehen und verjüngt sich an seinem der Kopplungsstelle 28 abgewandten Ende.

Außerdem ist der Durchmesser des Hohlraumes 26 geringer gewählt als der des Resonanzraumes 24 bzw. des Resonators 20, sodass die Kopplung zwischen dem System aus Hohlraum 26 und Resonanzraum 24 und dem Resonanzraum 24 alleine verringert wird. Bei zu hoher Kopplung und besonders bei einem zu großen Hohlraum 26 würde der Eigenschwingung im Resonanzraum 24 zu viel Leistung entzogen, wodurch diese Eigenschwingung bedämpft wäre.

Außerdem kann durch eine geeignete Wahl der Länge des Hohlraumes 26 die Resonanzfrequenz des Systems aus Hohlraum 26 und Resonanzraum 24 genügend weit von der Resonanzfrequenz des Resonanzraumes 24 alleine entfernt gewählt werden.

Das Modul 40 zur Spektralanalyse empfängt die vom Mikrofon 34 aufgenommenen Signale und ermittelt mithilfe einer Fourieranalyse- und/oder Korrelationsfunktionen das Frequenzspektrum des Signals und damit das Frequenzspektrum der im Resonanzraum 24 angeregten Schwingungen (S4).

Ein solches ermitteltes Spektrum ist in Figur 3 dargestellt. Anhand des ermittelten Frequenzspektrums bestimmt das Modul 40 die Frequenz $F_0$ der Grundschwingung bzw. des Grundtones der Eigenschwingungen des Resonanzraumes 24 (S5).

Im in Figur 3 gezeigten Fall ist die Frequenz $F_0$ der Grundschwingung einfach aus dem Frequenzspektrum ablesbar. Gegebenenfalls kann der abgelesene Wert $F_0$ mit den Frequenzen $F_1$, $F_2$, $F_3$ verglichen und korrigiert werden.

Im Falle, dass die Grundschwingung nicht im Resonanzraum 24 angeregt wurde und deswegen im Frequenzspektrum nicht vorhanden ist, bestimmt das Modul 40 anhand der Abstände der Frequenzen $F_1$, $F_2$, $F_3$ der im Frequenzspektrum auftretenden Obertöne die Frequenz Foder Grundschwingung.

Dadurch, dass ständig oder in regelmäßigen Abständen das gesamte Spektrum der im Resonanzraum 24 erzeugten Schwingungen bestimmt wird, ist es unerheblich, wie genau der Schallerzeuger 22 betrieben oder angesteuert wird. Der Schallerzeuger 22 muss lediglich ein breitbandiges Signal erzeugen, das akustische Schwingungen im Resonanzraum 24 anregt. Eine Abstimmung der Phase des erzeugten Schalls o. Ä. ist nicht nötig. Die Bestimmung der Feuchtigkeit und des Frequenzspektrums erfolgt somit unabhängig von der Ansteuerung der Schallquelle.

Auf Basis der von dem Modul 40 zur Spektralanalyse bestimmten Frequenz $F_0$ bestimmt die Steuer-einheit 38 nun die Schallgeschwindigkeit innerhalb des Resonanzraumes 24 mithilfe der Formel $c = \lambda_0 \cdot F_0$, wobei $\lambda_0$ die Wellenlänge der Grundschwingung ist. Die Wellenlänge der Grundschwingung $\lambda_0$ ist aufgrund der Geometrie des Resonanzraumes 24 bekannt und in der Steuereinheit 38 hinterlegt. In der gezeigten Ausführungsform entspricht die Wellenlänge $\lambda_0$ etwa der doppelten Länge 2L des Resonators 20 (S6).

Um die Feuchtigkeit innerhalb des Garraums bestimmen zu können, benötigt die Steuereinheit 38 den Wert der Temperatur T im Resonanzraum 24.

Hierzu wird zunächst in einem Schritt S7 von der Temperaturwerteinheit 36 ein Temperaturwert erzeugt.

In der gezeigten Ausführungsform ist die Temperaturwerteinheit 36 der Temperatursensor am Resonator 20, sodass durch Messung der Temperatur des Resonators 20 der Temperaturwert erzeugt wird.

Denkbar ist jedoch auch, dass die Temperaturwerteinheit 36 den Temperaturwert aus Daten der Gargerätsteuerung erzeugt. Beispielsweise entnimmt die Temperaturwerteinheit 36 die Solltemperatur der Heizvorrichtung aus der Gargerätsteuerung.

Die Steuereinheit 38 empfängt im Schritt S8 den Temperaturwert und passt den Temperaturwert gegebenenfalls an. Dies kann nötig sein, wenn sich der Resonator 20 außerhalb des Garraums 12 befindet, aber mit diesem in Verbindung steht, sodass er mit der Garraumatmosphäre gefüllt ist, während der Temperatursensor jedoch innerhalb des Garraums 12 vorgesehen ist, sodass die Temperatur T im Resonanzraum 24 geringer ist als die gemessene Temperatur im Garraum 12. In diesem Falle kann die Steuereinheit 38 den von der Temperaturwerteinheit 36 empfangenen Wert korrigieren. Auch korrigiert die Steuereinheit 38 den Temperaturwert gegebenenfalls dann, wenn der Temperaturwert, wie zuvor beschrieben, auf andere Weise von der Temperaturwerteinheit 36 erzeugt wurde, beispielsweise wenn der Temperaturwert 36 die Solltemperatur der Heizvorrichtung ist.

In der gezeigten Ausführungsform entspricht der Temperaturwert jedoch direkt der Temperatur des Resonators 20 und damit der Temperatur T des Resonanzraumes 24 und kann sofort verwendet werden.

Nun bestimmt die Steuereinheit 38 im Schritt S9 die Feuchtigkeit im Garraum 12 mithilfe der ermittelten Schallgeschwindigkeit c und der Temperatur T im Resonanzraum 24. Die Schallgeschwindigkeit c ist abhängig von der Temperatur T und der Zusammensetzung der Atmosphäre innerhalb des Resonanzraumes 24. Für ideale Gase gilt:

$$c = \sqrt{\frac{(\kappa_{atmo} \cdot R_{mol} \cdot T)}{M_{atmo}}},$$

wobei $R_{mol}$ die universelle Gaskonstante ist, $K_{atmo}$ der Adiabatenexponent und $M_{atmo}$ die molare Masse der Gasmischung aus Wasserdampf und Luft der Garraumatmosphäre.

$M_{atmo}$ und $K_{atmo}$ bzw. deren Verhältnis können also bestimmt werden, da die Schallgeschwindigkeit c, die universelle Gaskonstante $R_{mol}$ und die Temperatur T bekannt sind. Diese Näherung beschreibt auch die realen Gase Wasserdampf und Luft relativ gut. Es können aber, insbesondere für Wasserdampf, Abweichungen vom Verhalten idealer Gase berücksichtigt werden. Alternativ kann ein empirischer Zusammenhang zwischen Schallgeschwindigkeit und Gaszusammensetzung verwendet werden.

Auf diese Weise lässt sich die Zusammensetzung der Atmosphäre im Resonanzraum 24 bestimmen, d. h. der Anteil von Wasserdampf zu Luft in der Atmosphäre, wodurch auch die Feuchtigkeit in der Atmosphäre im Garraum 12 bestimmt ist.

Selbstverständlich können die beiden Gleichungen auch ineinander eingesetzt und nach dem Verhältnis von $M_{atmo}$ zu $K_{atmo}$ aufgelöst werden. Denkbar sind auch noch weitere Berechnungsarten dieses Verhältnisses.

Der auf diese Weise bestimmte Wert der Feuchtigkeit kann nun von der Steuereinheit 38 an die Gargerätsteuerung des Gargerätes 10 übergeben werden.

Im Folgenden werden weitere Ausführungsformen des erfindungsgemäßen Gargeräts beschrieben, die im Wesentlichen der ersten Ausführungsform entsprechen. Gleiche oder funktionsgleiche Teile werden mit denselben Bezugszeichen versehen und es wird nur auf die Unterschiede eingegangen.

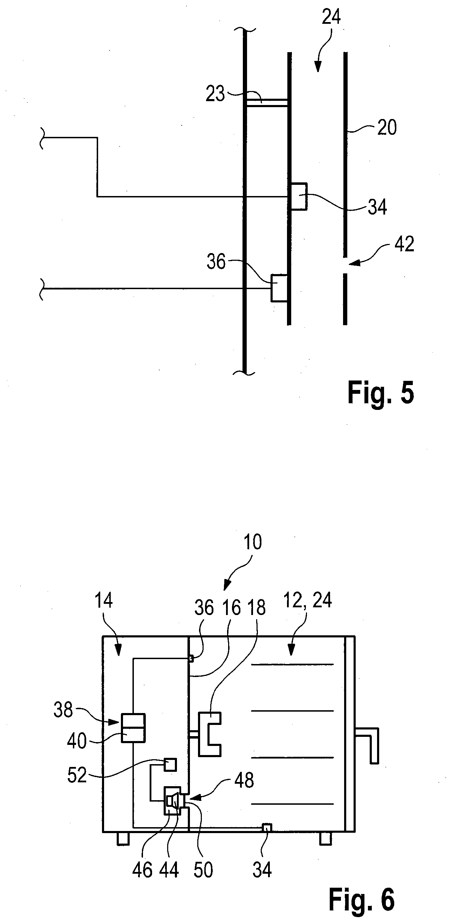

Figur 5 zeigt eine vergrößerte Darstellung eines Teils eines erfindungsgemäßen Gargerätes 10 gemäß einer zweiten Ausführungsform der Erfindung. Die Darstellung der Figur 5 entspricht der Darstellung der Figur 2 zur ersten Ausführungsform.

Im Unterschied zur ersten Ausführungsform ist kein Hohlraum 26 vorgesehen, sondern das Mikrofon 34 ist direkt im Resonator 20, also im Resonanzraum 24, angeordnet.

Das Mikrofon 34 kann dabei an der Stelle angeordnet sein, an der die Kopplungsstelle 28 in der ersten Ausführungsform angeordnet war, d. h. in Längsrichtung des Rohres des Resonators 20 etwa auf der halben Länge L/2.

Denkbar ist auch, dass das Mikrofon 34 oder die Kopplungsstelle 28 einen Abstand vom Ende des Rohrs hat, der zwischen 10% und 15%, insbesondere etwa 13% der Länge des Rohres beträgt. Dadurch wird eine besonders präzise Messung möglich, da dort die unteren Eigenmoden mehr als ihren halben Maximalpegel haben.

Durch die Anordnung des Mikrofons 34 im Resonanzraum 24 kann die Temperatur im Resonanzraum 24 direkt gemessen werden. Jedoch ist in dieser Ausführungsform das Mikrofon 34 auch der heißen und zum Teil fettigen Atmosphäre im Garraum ausgesetzt, wodurch die Anforderungen an die Belastbarkeit des Mikrofons 34 deutlich steigen.

In Figur 6 ist eine dritte Ausführungsform eines erfindungsgemäßen Gargeräts 10 dargestellt.

In der dritten Ausführungsform nach Figur 6 ist kein separater Resonator 20 vorgesehen, sondern der Garraum 12 dient selbst als Resonanzraum 24.

Auch die Methode zur Erzeugung von akustischen Schwingungen im Resonanzraum 24 unterscheidet sich von der der ersten Ausführungsform.

In der Ausführungsform nach Figur 6 ist der Schallerzeuger 22 ein Lautsprecher 44.

Der Lautsprecher 44 ist in einem Lautsprecherraum 46 vorgesehen, der sich innerhalb des Technikraums 14 befindet und der durch eine Leitung 48 mit dem Garraum 12 in Verbindung steht.

In der Leitung 48 ist eine weitere Membran 50 vorgesehen, die eine akustische Kopplung zwischen dem Garraum 12 und dem Lautsprecherraum 46 ermöglicht, gleichzeitig jedoch den Lautsprecher 44 vor der Atmosphäre des Garraumes 12 schützt.

Denkbar ist selbstverständlich auch, dass der Lautsprecher 44 im Garraum 12 angeordnet ist.

Mit dem Lautsprecher 44 ist eine Lautsprechersteuerung 52 elektrisch verbunden, die den Lautsprecher 44 ansteuert.

In der gezeigten Ausführungsform ist das Mikrofon 34 in zentraler Position am Boden des Garraums 12 angeordnet. Denkbar ist selbstverständlich auch die Anbringung des Mikrofons 34 an einer Seitenwand oder der Decke des Garraums 12.

Die Lautsprechersteuerung 52 steuert den Lautsprecher 44 so, dass dieser weißes Rauschen, also ein breitbandiges Schallsignal emittiert.

Alternativ kann der Lautsprecher 44 durch die Ansteuerung der Lautsprechersteuerung 52 Frequenzsweeps durchführen. Dabei erzeugt der Lautsprecher 44 akustische Schwingungen mit jeweils einer Frequenz, also reine Töne, wobei die Tonhöhe, d. h. die Frequenz dieser Schwingungen ein vorbestimmtes Frequenzband wiederholt durchläuft. Somit ist die Ausgabe des Lautsprechers 44 auch in diesem Falle breitbandig, da Töne mit verschiedenen Frequenzen erzeugt werden.

Durch den Lautsprecher 44 angeregt, bilden sich nun im Garraum 12, ähnlich wie im Resonator 20 der ersten Ausführungsform, stehende Wellen aus, die der Grundschwingung und/oder Obertönen des Resonanzraumes 24 entsprechen.

Die Schwingungen werden auch in dieser Ausführungsform vom Mikrofon 34 erfasst und die Bestimmung der Frequenz $F_0$ der Grundschwingung des Garraums 12 und die Bestimmung der Feuchtigkeit innerhalb des Garraums 12 erfolgt auf die gleiche Weise, die zur ersten Ausführungsform beschrieben wurde.

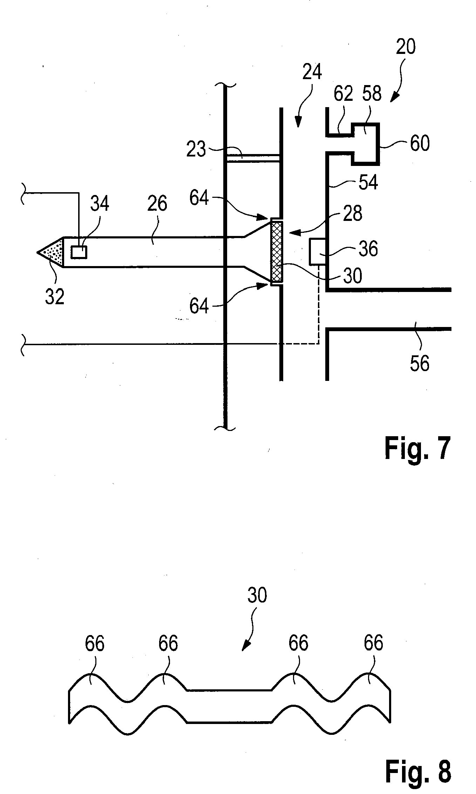

In Figur 7 ist eine vierte Ausführungsform eines erfindungsgemäßen Gargeräts dargestellt. Die Ansicht der Figur 7 ähnelt dabei stark derjenigen der Figur 2.

Der Resonator 20 der vierten Ausführungsform weist ein erstes Rohr 54, das dem Rohr der ersten Ausführungsform entspricht, ein zweites Rohr 56 und eine Kavität 58 auf.

Das erste Rohr 54 hat ein Innenvolumen, das einen Teil des Resonanzraumes 24 bildet.

Das zweite Rohr 56 geht vom ersten Rohr 54 aus und ist an seinem vom ersten Rohr 54 abgewandten Ende offen, d.h. es mündet in den Garraum 12.

Das Innenvolumen des zweiten Rohres 56 ist somit direkt mit dem Innenvolumen des ersten Rohres 54 verbunden und bildet ebenfalls einen Teil des Resonanzraumes 24.

Die Kavität 58 ist ein Gefäß mit einem abgeschlossenen Innenvolumen, das nur mit dem Innenvolumen des ersten Rohres 54 direkt verbunden ist. Das Innenvolumen der Kavität 58 ist somit ebenfalls Teil des Resonanzraumes 24.

In der gezeigten Ausführungsform besteht die Kavität 58 aus einem quaderförmigen Hohlkörper 60, der über eine Verbindungsleitung 62 mit dem ersten Rohr 54 verbunden ist. Eine solche Konstruktion wird auch Helmholtz-Resonator genannt.

Dadurch, dass der Resonanzraum 24 nun neben dem Innenvolumen des ersten Rohres 54 weitere Volumina aufweist, ändert sich das Spektrum an Resonanzfrequenzen, die sich im Resonanzraum 24 und damit im Resonator 20 ausbilden können. Dadurch ergibt sich für den Resonator 20 ein charakteristisches Frequenzspektrum (auch Resonanzspektrum genannt) der im Resonator 20 vorhandenen Schwingungen, das zur Bestimmung der Schallgeschwindigkeit und damit der Luftfeuchtigkeit herangezogen werden kann. Da das charakteristische Frequenzspektrum aus mehreren Frequenzen besteht ist es einfacher von den Frequenzen von Störquellen zu unterscheiden.

Die einzelnen Frequenzen des Frequenzspektrums können durch die Dimensionen des zweiten Rohres 56 und der Kavität 58 und deren Ankopplungspunkte an das erste Rohr 54 beeinflusst werden.

Die in der Figur 7 gezeigten Stellen sind somit nur Beispiele.

Außerdem ist die Temperaturwerteinheit 36 in dieser vierten Ausführungsform innerhalb des Resonators 20 vorgesehen.

Die Temperaturwerteinheit 36 kann sich im Bereich der Kopplungsstelle 28 befinden, z. B. gegenüber der Mündung des Hohlraumes 26.

Zudem ist in der vierten Ausführungsform an der Kopplungsstelle 28 eine Stufe 64 vorgesehen. Die Stufe 64 ist plan und dient als Auflagefläche für die Membran 30.

Die Membran 30 ist in dieser Ausführungsform, wie in Figur 8 zu sehen, geprägt, sodass sie im Querschnitt wellenförmig ist und sich zwei zueinander und zur Membran 30 konzentrische Ringe 66 bilden.

Durch diese Ringe 66 werden Spannungen in der Membran 30, die sich beim Einbau der Membran 30 in das Gargerät 10 ergeben, aufgenommen. Dadurch kann der Bereich innerhalb des innersten Ringes 66 von Spannungen frei gehalten werden, wodurch seine Schwingungseigenschaften, wie seine Rückstellkraft, durch den Einbau nicht beeinträchtigt sind.

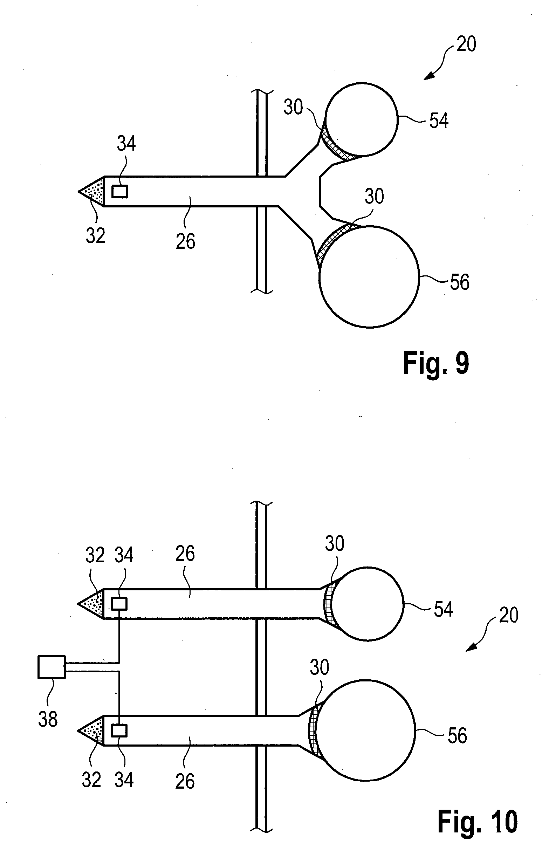

In Figur 9 ist eine fünfte Ausführungsform der Erfindung zu sehen. Die Figur 9 zeigt einen horizontalen Schnitt durch die Garraumwand, den Hohlraum 26 und den Resonator 20.

Der Resonator 20 weist auch in dieser Ausführungsform ein erstes Rohr 54 und ein zweites Rohr 56 auf, wobei die beiden Rohre 54 und 56 nun parallel verlaufen. Außerdem haben die beiden Innenvolumina der Rohre 54 und 56 keinen direkten fluidischen Kontakt. Trotzdem bilden die beiden Rohre 54 und 56 aufgrund ihrer Nähe zueinander den Resonator 20.

Die Rohre 54, 56 haben unterschiedliche Durchmesser und Längen. Beispielsweise ist das erste Rohr 54 kürzer und hat einen kleineren Durchmesser als das zweite Rohr 56.

Der Hohlraum 26 ist in dieser Ausführungsform mit beiden Rohren 54, 56 genauer gesagt mit beiden Innenvolumina der Rohre 54, 56 verbunden. Hierzu ist jeweils eine Kopplungsstelle 28 und eine Membran 30 vorgesehen.

Auch ist es denkbar, dass in jeder der Rohre 54, 56 eine eigene Temperaturwerteinheit 36 vorgesehen ist.

Der Effekt der beiden Rohre 54, 56 des Resonators 20 ist der gleiche wir zur vierten Ausführungsform beschrieben, da das zweite Rohr 56 dem Frequenzspektrum des Resonators 20 weitere Frequenzen hinzufügt.

In Figur 10 ist eine sechste Ausführungsform der Erfindung gezeigt. Diese entspricht im Wesentlichen der fünften Ausführungsform, jedoch sind in dieser sechsten Ausführungsform zwei Hohlräume 26 vorgesehen, die mit jeweils einem der Rohre 54, 56 verbunden sind, so wie zur ersten Ausführungsform beschrieben.

Die Mikrofone 34 der beiden Hohlräume 26 sind mit der Steuereinheit 38 verbunden.

Es kann vorgesehen sein, dass die Ausführungsform nach Figur 1 auch ohne einen separaten Resonator 20 ausgeführt sein kann und/oder ebenfalls der Garraum 12 als Resonanzraum 24 verwendet wird.

Auch kann in der ersten Ausführungsform ein Lautsprecher 44 als Schallerzeuger 22 dienen.

Denkbar ist es auch, dass die Steuereinheit 38 und/oder die Lautsprechersteuerung 52 in der Gargerätsteuerung integriert sind.

**Patentansprüche**

1. Verfahren zur Bestimmung der Feuchtigkeit innerhalb eines Garraumes (12) eines Gargerätes (10), mit den folgenden Schritten:

   a) in einem Resonanzraum (24) im Gargerät (10) wird mittels eines Schallerzeugers (22) ein akustisches breitbandiges Signal erzeugt,

b) eine Steuereinheit (38) empfängt von einem Mikrofon (34) im Resonanzraum (24) aufgenommene Signale,

c) die Steuereinheit (38) bestimmt anhand der empfangenen Signale das Frequenzspektrum des im Resonanzraum (24) vorhandenen akustischen Signals unabhängig von der Ansteuerung des Schallerzeugers (22) und anhand der Grundfrequenz des Frequenzspektrums oder Obertönen des Frequenzspektrums, aus denen die Grundfrequenz bestimmbar ist, die Schallgeschwindigkeit innerhalb des Resonanzraums (24), wobei der Resonanzraum (24) mit Garraumatmosphäre gefüllt ist,

d) die Steuereinheit (38) empfängt oder bestimmt einen Temperaturwert, wobei der Temperaturwert einer Temperatur im Resonanzraum (24) entspricht,

e) die Steuereinheit (38) bestimmt mithilfe des Temperaturwertes und der Schallgeschwindigkeit die Feuchtigkeit innerhalb des Garraums (12).

2. Verfahren nach Anspruch 1, **dadurch gekennzeichnet, dass** die Steuereinheit (38) das Frequenzspektrum mittels einer Fourieranalyse und/oder durch die Bestimmung einer Korrelationsfunktion ermittelt.

3. Gargerät mit einem Garraum (12), einem Resonanzraum (24), einem Schallerzeuger (22), der dazu ausgebildet ist, ein breitbandiges Signal im Resonanzraum (24) zu erzeugen, einem dem Resonanzraum (24) zugeordneten Mikrofon (34), einer Temperaturwerteinheit (36), die ein von der Temperatur der Atmosphäre im Resonanzraum (24) abhängiges Signal erzeugen kann, und einer Steuereinheit (38), an die das Mikrofon (34) und die Temperaturwerteinheit (36) angeschlossen sind, wobei die Steuereinheit (38) ein Modul (40) zur Spektralanalyse enthält, insbesondere ein Fourieranalyse- und/oder ein Korrelationsfunktions-Modul, und wobei die Steuereinheit (38) dazu ausgebildet und eingerichtet ist, anhand der vom Mikrofon (34) empfangenen Signale ein Frequenzspektrum des im Resonanzraum (24) vorhandenen akustischen Signals unabhängig von der Ansteuerung des Schallerzeugers (22) zu bestimmen und anhand der Grundfrequenz des Frequenzspektrums oder Obertönen des Frequenzspektrums, aus denen die Grundfrequenz bestimmbar ist, die Schallgeschwindigkeit innerhalb des Resonanzraums (24) und mithilfe des Temperaturwertes und der Schallgeschwindigkeit die Feuchtigkeit innerhalb des Garraums (12) gemäß dem einem Verfahren nach einem der Ansprüche 1 oder 2 zu bestimmen.

4. Gargerät nach Anspruch 3, **dadurch gekennzeichnet, dass** das Gargerät (10) ein Lüfterrad (18) aufweist, wobei das Lüfterrad (18) den Schallerzeuger (22) darstellt.

5. Gargerät nach Anspruch 3, **dadurch gekennzeichnet, dass** das Gargerät (10) einen Lautsprecher (44) aufweist, wobei der Lautsprecher (44) den Schallerzeuger (22) darstellt.

6. Gargerät nach Anspruch 5, **dadurch gekennzeichnet, dass** das Gargerät (10) eine Lautsprechersteuerung (52) aufweist, die derart ausgebildet ist, dass sie den Lautsprecher (44) derart steuert, dass der Lautsprecher (44) ein Rauschen emittiert oder einen Frequenzsweep durchführt.

7. Gargerät nach einem der Ansprüche 3 bis 6, **dadurch gekennzeichnet, dass** der Garraum (12) des Gargerätes (10) der Resonanzraum (24) ist.

8. Gargerät nach einem der Ansprüche 3 bis 6, **dadurch gekennzeichnet, dass** der Resonanzraum (24) innerhalb eines Resonators (20) liegt, der zum Garraum (12) des Gargeräts (10) offen ist.

9. Gargerät nach Anspruch 8, **dadurch gekennzeichnet, dass** der Resonator (20) im Garraum (12) des Gargerätes (10) angeordnet ist.

10. Gargerät nach Anspruch 8 oder 9, **dadurch gekennzeichnet, dass** der Resonator (20) als Rohr ausgeführt ist.

11. Gargerät nach Anspruch 8 oder 9, **dadurch gekennzeichnet, dass** der Resonator (20) ein erstes Rohr (54) und ein mit dem ersten Rohr (54) akustisch gekoppeltes zweites Rohr (56) und/oder eine mit dem ersten Rohr (54) akustisch gekoppelte Kavität (58) aufweist.

12. Gargerät nach Anspruch 11, **dadurch gekennzeichnet, dass** das zweite Rohr (56) und/oder die Kavität (58) vom ersten Rohr (54) ausgehen.

13. Gargerät nach einem der Ansprüche 3 bis 12, **dadurch gekennzeichnet, dass** das Gargerät (10) einen Hohlraum (26) aufweist, der mit dem Resonanzraum (24) an einer Kopplungsstelle (28) akustisch gekoppelt ist, wobei das Mikrofon (34) im Hohlraum (26) vorgesehen ist.

14. Gargerät nach Anspruch 13, **dadurch gekennzeichnet, dass** der Hohlraum (26) eine Membran (30) aufweist, die in der Kopplungsstelle (28) angeordnet ist.

15. Gargerät nach Anspruch 14, **dadurch gekennzeichnet, dass** die Membran (30) eine Prägung aus wenigstens einem konzentrischen Ring (66) aufweist.

16. Gargerät nach einem der Ansprüche 13 bis 15, **dadurch gekennzeichnet, dass** der Hohlraum (26) an seinem der Kopplungsstelle (28) abgewandten Ende schwingungsdämpfend oder schwingungsabsorbierend geformt ist, insbesondere sich von der Kopplungsstelle (28) ausgehend verjüngt, insbesondere spitz zuläuft.

17. Gargerät nach einem der Ansprüche 13 bis 16, **dadurch gekennzeichnet, dass** der Hohlraum (26), insbesondere an seinem der Kopplungsstelle (28) abgewandten Ende, mit schallabsorbierendem Material (32) versehen ist.

18. Gargerät nach einem der Ansprüche 13 bis 17, **dadurch gekennzeichnet, dass** sich der Hohlraum (26) zur Kopplungsstelle (28) hin trichterförmig aufweitet.

19. Gargerät nach einem der Ansprüche 3 bis 10, **dadurch gekennzeichnet, dass** das Mikrofon (34) im Resonanzraum (24) vorgesehen ist.

20. Gargerät nach einem der Ansprüche 3 bis 19, **dadurch gekennzeichnet, dass** das Mikrofon (34) oder die Kopplungsstelle (28) im Bereich des Maximums des Schalldruckes einer oder mehrerer Eigenschwingungen des Resonanzraumes (24) angeordnet ist.

21. Gargerät nach einem der Ansprüche 3 bis 20, **dadurch gekennzeichnet, dass** die Temperaturwerteinheit (36) am oder im Resonator (20), insbesondere im Bereich der Kopplungsstelle (28) vorgesehen ist.

## Claims

1. A method of determining the moisture within a cooking chamber (12) of a cooking device (10), comprising the following steps:

   a) a broadband acoustic signal is generated in a resonance chamber (24) in the cooking device (10) by means of a sound generator (22);
   b) a control unit (38) receives signals picked up by a microphone (34) in the resonance chamber (24);
   c) the control unit (38) determines the frequency spectrum of the acoustic signal present in the resonance chamber (24) on the basis of the received signals independently of the drive of the sound generator (22) and determines the speed of sound within the resonance chamber (24) on the basis of the fundamental frequency of the frequency spectrum or harmonics of the frequency spectrum from which the fundamental frequency can be determined, the resonance chamber (24) being filled with cooking chamber atmosphere;
   d) the control unit (38) receives or determines a temperature value, the temperature value corresponding to a temperature in the resonance chamber (24);
   e) the control unit (38) determines the moisture within the cooking chamber (12) by means of the temperature value and the speed of sound.

2. The method according to claim 1, **characterized in that** the control unit (38) determines the frequency spectrum by means of a Fourier analysis and/or by determining a correlation function.

3. A cooking device comprising a cooking chamber (12), a resonance chamber (24), a sound generator (22) that is adapted to generate a broadband signal in the resonance chamber (24), a microphone (34) associated with the resonance chamber (24), a temperature value unit (36) which can generate a signal which is dependent on the temperature of the atmosphere in the resonance chamber (24), and a control unit (38) to which the microphone (34) and the temperature value unit (36) are connected, the control unit (38) containing a module (40) for spectral analysis, in particular a Fourier analysis module and/or a correlation function module, and wherein the control unit (38) is adapted and configured to determine, on the basis of the signals received from the microphone (34), a frequency spectrum of the acoustic signal present in the resonance chamber (24) independently of the drive of the sound generator (22) and to determine, on the basis of the fundamental frequency of the frequency spectrum or harmonics of the frequency spectrum from which the fundamental frequency can be determined, the speed of sound within the resonance chamber (24) and, with the aid of the temperature value and the speed of sound, the moisture within the cooking chamber (12) in accordance with the method according to either of claims 1 or 2.

4. The cooking device according to claim 3, **characterized in that** the cooking device (10) includes a fan wheel (18), the fan wheel (18) constituting the sound generator (22).

5. The cooking device according to claim 3, **characterized in that** the cooking device (10) includes a loudspeaker (44), the loudspeaker (44) constituting the sound generator (22).

6. The cooking device according to claim 5, **characterized in that** the cooking device (10) includes a loudspeaker controller (52) adapted to control the loudspeaker (44) such that the loudspeaker (44) emits noise or performs a frequency sweep.

**7.** The cooking device according to any of claims 3 to 6, **characterized in that** the cooking chamber (12) of the cooking device (10) is the resonance chamber (24).

**8.** The cooking device according to any of claims 3 to 6, **characterized in that** the resonance chamber (24) lies within a resonator (20) which is open to the cooking chamber (12) of the cooking device (10).

**9.** The cooking device according to claim 8, **characterized in that** the resonator (20) is arranged in the cooking chamber (12) of the cooking device (10).

**10.** The cooking device according to claim 8 or 9, **characterized in that** the resonator (20) is configured as a tube.

**11.** The cooking device according to claim 8 or 9, **characterized in that** the resonator (20) includes a first tube (54) and a second tube (56) acoustically coupled to the first tube (54) and/or a cavity (58) acoustically coupled to the first tube (54).

**12.** The cooking device according to claim 11, **characterized in that** the second tube (56) and/or the cavity (58) extend from the first tube (54).

**13.** The cooking device according to any of claims 3 to 12, **characterized in that** the cooking device (10) has a cavity (26) which is acoustically coupled to the resonance chamber (24) at a coupling site (28), the microphone (34) being provided in the cavity (26).

**14.** The cooking device according to claim 13, **characterized in that** the cavity (26) includes a diaphragm (30) which is arranged in the coupling site (28).

**15.** The cooking device according to claim 14, **characterized in that** the diaphragm (30) has an embossing consisting of at least one concentric ring (66).

**16.** The cooking device according to any of claims 13 to 15, **characterized in that** at its end remote from the coupling site (28), the cavity (26) is shaped so as to be vibration damping or vibration absorbing, in particular tapers starting from the coupling site (28), in particular tapers to a point.

**17.** The cooking device according to any of claims 13 to 16, **characterized in that** the cavity (26), in particular at its end remote from the coupling site (28), is provided with sound-absorbing material (32).

**18.** The cooking device according to any of claims 13 to 17, **characterized in that** the cavity (26) widens in a funnel-shaped manner towards the coupling site (28).

**19.** The cooking device according to any of claims 3 to 10, **characterized in that** the microphone (34) is provided in the resonance chamber (24).

**20.** The cooking device according to any of claims 3 to 19, **characterized in that** the microphone (34) or the coupling site (28) is arranged in the region of the maximum of the sound pressure of one or more natural oscillations of the resonance chamber (24).

**21.** The cooking device according to any of claims 3 to 20, **characterized in that** the temperature value unit (36) is provided at or in the resonator (20), in particular in the region of the coupling site (28).

**Revendications**

**1.** Procédé de détermination de l'humidité à l'intérieur de l'espace de cuisson (12) d'un appareil de cuisson (10), comprenant les étapes suivantes :

a) un signal acoustique à large bande est généré dans un espace de résonance (24) dans l'appareil de cuisson (10) au moyen d'un générateur acoustique (22),
b) une unité de commande (38) reçoit d'un microphone (34) des signaux enregistrés dans l'espace de résonance (24),
c) l'unité de commande (38) détermine, sur la base des signaux reçus, le spectre de fréquences du signal acoustique présent dans l'espace de résonance (24) indépendamment de la commande du générateur acoustique (22), et, sur la base de la fréquence de base du spectre de fréquences ou de sons harmoniques du spectre de fréquences à partir desquels la fréquence de base peut être déterminée, la vitesse du son dans l'espace de résonance (24), l'espace de résonance (24) étant rempli d'atmosphère d'espace de cuisson,
d) l'unité de commande (38) reçoit et détermine une valeur de température, la valeur de température correspondant à une température dans l'espace de résonance (24),
e) l'unité de commande (38) détermine l'humidité à l'intérieur de l'espace de cuisson (12) au moyen de la valeur de température et de la vitesse du son.

**2.** Procédé selon la revendication 1, **caractérisé en ce que** l'unité de commande (38) détermine le spectre des fréquences au moyen d'une analyse de Fourier et/ou par la définition d'une fonction de corrélation.

3. Appareil de cuisson, comprenant un espace de cuisson (12), un espace de résonance (24), un générateur acoustique (22) qui est réalisé de manière à générer un signal à large bande dans l'espace de résonance (24), un microphone (34) associé à l'espace de résonance (24), une unité de valeur de température (36) qui est apte à générer un signal dépendant de la température de l'atmosphère dans l'espace de résonance (24), et une unité de commande (38) à laquelle le microphone (34) et l'unité de valeur de température (36) sont connectés, l'unité de commande (38) contenant un module (40) pour l'analyse spectrale, en particulier un module d'analyse de Fourier et/ou de fonction de corrélation, et l'unité de commande (38) étant réalisée et aménagée de manière à déterminer, sur la base des signaux reçus du microphone (34), un spectre de fréquences du signal acoustique présent dans l'espace de résonance (24) indépendamment de la commande du générateur acoustique (22), et, sur la base de la fréquence de base du spectre de fréquences ou de sons harmoniques du spectre de fréquences à partir desquels la fréquence de base peut être déterminée, la vitesse du son dans l'espace de résonance (24), et l'humidité à l'intérieur de l'espace de cuisson (12) au moyen de la valeur de température et de la vitesse du son, selon le procédé selon l'une des revendications 1 ou 2.

4. Appareil de cuisson selon la revendication 3, **caractérisé en ce que** l'appareil de cuisson (10) présente une roue de ventilateur (18), la roue de ventilateur (18) représentant le générateur acoustique (22).

5. Appareil de cuisson selon la revendication 3, **caractérisé en ce que** l'appareil de cuisson (10) présente un haut-parleur (44), le haut-parleur (44) représentant le générateur acoustique (22).

6. Appareil de cuisson selon la revendication 5, **caractérisé en ce que** l'appareil de cuisson (10) présente une commande de haut-parleur (52) qui est réalisée de manière à commander le hautparleur (44) de telle sorte que le hautparleur (44) émet un bruit ou effectue un balayage de fréquence.

7. Appareil de cuisson selon l'une des revendications 3 à 6, **caractérisé en ce que** l'espace de cuisson (12) de l'appareil de cuisson (10) est l'espace de résonance (24).

8. Appareil de cuisson selon l'une des revendications 3 à 6, **caractérisé en ce que** l'espace de résonance (24) se trouve à l'intérieur d'un résonateur (20) qui est ouvert vers l'espace de cuisson (12) de l'appareil de cuisson (10).

9. Appareil de cuisson selon la revendication 8, **caractérisé en ce que** le résonateur (20) est agencé dans l'espace de cuisson (12) de l'appareil de cuisson (10).

10. Appareil de cuisson selon la revendication 8 ou 9, **caractérisé en ce que** le résonateur (20) est réalisé sous forme de tube.

11. Appareil de cuisson selon la revendication 8 ou 9, **caractérisé en ce que** le résonateur (20) présente un premier tube (54) et un deuxième tube (56) acoustiquement couplé au premier tube (54) et/ou une cavité (58) acoustiquement couplée au premier tube (54).

12. Appareil de cuisson selon la revendication 11, **caractérisé en ce que** le deuxième tube (56) et/ou la cavité (58) s'étend(ent) à partir du premier tube (54).

13. Appareil de cuisson selon l'une des revendications 3 à 12, **caractérisé en ce que** l'appareil de cuisson (10) présente un vide (26) qui est acoustiquement couplé à l'espace de résonance (24) à un point de couplage (28), le microphone (34) étant prévu dans l'espace creux (26).

14. Appareil de cuisson selon la revendication 13, **caractérisé en ce que** le vide (26) présente une membrane (30) qui est agencée dans le point de couplage (28).

15. Appareil de cuisson selon la revendication 14, **caractérisé en ce que** la membrane (30) présente une empreinte en au moins un anneau concentrique (66).

16. Appareil de cuisson selon l'une des revendications 13 à 15, **caractérisé en ce que** le vide (26), à son extrémité détournée du point de couplage (28), est réalisé de manière à amortir les vibrations ou à absorber les vibrations, en particulier s'amincit, en particulier s'effile à partir du point de couplage (28).

17. Appareil de cuisson selon l'une des revendications 13 à 16, **caractérisé en ce que** le vide (26), en particulier à son extrémité détournée du point de couplage (28), est pourvu de matière à absorption acoustique (32).

18. Appareil de cuisson selon l'une des revendications 13 à 17, **caractérisé en ce que** le vide (26) s'évase en forme d'entonnoir vers le point de couplage (28).

19. Appareil de cuisson selon l'une des revendications 3 à 10, **caractérisé en ce que** le microphone (34) est prévu dans l'espace de résonance (24).

20. Appareil de cuisson selon l'une des revendications 3 à 19, **caractérisé en ce que** le microphone (34) ou le point de couplage (28) est agencé dans la zone du maximum de la pression acoustique d'une ou de plusieurs vibrations propres de l'espace de résonance (24).

21. Appareil de cuisson selon l'une des revendications 3 à 20, **caractérisé en ce que** l'unité de valeur de température (36) est prévue sur ou dans le résonateur (20), en particulier dans la zone du point de couplage (28).

10

14        16    18, 22    12

40

38

34 26 36 24 20

## Fig. 1

24

23

20

34    26    28

32    30

36    42

## Fig. 2

**Fig. 3**

**Fig. 4**

**Fig. 5**

**Fig. 6**

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1300079 A2